(19) Europäisches Patentamt
European Patent Office
Office européen des brevets

(11) **EP 3 428 712 A1**

(12) **EUROPÄISCHE PATENTANMELDUNG**

(43) Veröffentlichungstag:
**16.01.2019 Patentblatt 2019/03**

(51) Int Cl.:
*G02B 27/09* (2006.01)     *G02B 19/00* (2006.01)

(21) Anmeldenummer: **18177800.2**

(22) Anmeldetag: **14.06.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **13.07.2017  DE 102017115805**

(71) Anmelder: **LIMO GmbH
44319 Dortmund (DE)**

(72) Erfinder: **Krasnaberski, Dr., Aliaksei
44229 Dortmund (DE)**

(74) Vertreter: **Basfeld, Rainer et al
Fritz Patent- und Rechtsanwälte
Partnerschaft mbB
Postfach 1580
59705 Arnsberg (DE)**

(54) **VORRICHTUNG ZUR STRAHLFORMUNG VON LASERSTRAHLUNG**

(57)     Vorrichtung zur Strahlformung von Laserstrahlung (10), insbesondere zur Strahlformung von Laserstrahlung (10) in Form von ultrakurzen Pulsen, umfassend eine optisch funktionale Transformationsgrenzfläche (4), durch die die Laserstrahlung (10) zumindest teilweise derart hindurch treten kann, dass das Profil der Laserstrahlung (10) in ein Top-Hat-Profil transformiert wird, achromatische Optikmittel (1), die ein erstes Substrat (2) mit einer ersten Abbe-Zahl und ein zweites Substrat (3) mit einer zweiten Abbe-Zahl umfassen, wobei die erste Abbe-Zahl von der zweiten Abbe-Zahl verschieden ist, wobei die beiden Substrate (2, 3) miteinander verbunden sind, wobei die Laserstrahlung (10) zumindest teilweise nacheinander durch beiden Substrate (2, 3) hindurch treten kann, und wobei die optisch funktionale Transformationsgrenzfläche (4) an einem der beiden Substrate (2, 3) ausgebildet ist.

## Fig. 1

EP 3 428 712 A1

**Beschreibung**

Die vorliegende Erfindung betrifft eine Vorrichtung zur Strahlformung von Laserstrahlung, insbesondere zur Strahlformung von Laserstrahlung in Form von ultrakurzen Pulsen, gemäß dem Oberbegriff des Anspruchs 1.

<u>Definitionen</u>: In Ausbreitungsrichtung der Laserstrahlung meint mittlere Ausbreitungsrichtung der Laserstrahlung, insbesondere wenn diese keine ebene Welle ist oder zumindest teilweise divergent ist. Mit Laserstrahl, Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil, der keinen infinitesimal kleinen, sondern einen ausgedehnten Strahlquerschnitt aufweist. Mit Top-Hat-Verteilung oder Top-Hat-Intensitätsverteilung oder Top-Hat-Profil ist eine Intensitätsverteilung gemeint, die sich zumindest hinsichtlich einer Richtung im Wesentlichen durch eine Rechteckfunktion (rect (x)) beschreiben lässt. Dabei sollen reale Intensitätsverteilungen, die Abweichungen von einer Rechteckfunktion im Prozentbereich beziehungsweise geneigte Flanken aufweisen, ebenfalls als Top-Hat-Verteilung oder Top-Hat-Profil bezeichnet werden.

Eine Vorrichtung der eingangs genannten Art ist aus der US 2010/0208356 A1 bekannt. Die darin beschriebene Vorrichtung umfasst mehrere Laserlichtquellen, die Laserstrahlungen mit voneinander verschiedenen Wellenlängen aussenden, sowie einen Multiplexer, der die unterschiedlichen Laserstrahlungen zu einer polychromatischen Laserstrahlung zusammenfasst. Die Vorrichtung umfasst weiterhin eine Powelllinse, durch die die polychromatische Laserstrahlung hindurchtritt, wobei das Profil der Laserstrahlung zumindest teilweise in ein Top-Hat-Profil transformiert wird. Dabei entstehen aufgrund der unterschiedlichen Wellenlängen Fokusverschiebungen. Die Vorrichtung umfasst weiterhin eine von der Powelllinse beabstandete Fokussieroptik, die aus zwei Achromaten besteht. Die aus den Achromaten bestehende Fokussieroptik korrigiert die durch die unterschiedlichen Wellenlängen der einzelnen Komponenten der Laserstrahlung entstandenen Fokusverschiebungen.

Die in dieser Schrift beschriebene Vorrichtung ist vergleichsweise kompliziert aufgebaut und erfordert eine genaue Justierung des Systems, die spezifisch ist für die gewählten Wellenlängen der miteinander gemischten einzelnen Laserstrahlungen. Wenn andere Wellenlängen verwendet werden sollen, muss das System neu optimiert werden.

Insbesondere bei ultrakurzen Laserpulsen mit Pulslängen von beispielsweise weniger als 100 fs weist die Laserstrahlung eine Bandbreite auf, die mehrere zehn oder sogar mehrere hundert Nanometer groß sein kann. Derartige Laserpulse lassen sich mit herkömmlichen Vorrichtungen zur Strahlformung nicht effektiv in Laserstrahlung mit einem Top-Hat-Profil umwandeln.

Das der vorliegenden Erfindung zugrunde liegende Problem ist die Schaffung einer Vorrichtung der eingangs genannten Art, die breitbandige Laserstrahlung effektiver in Laserstrahlung mit einem Top-Hat-Profil umwandeln kann und/oder einfacher aufgebaut ist.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die optisch funktionale Transformationsgrenzfläche an einem der beiden Substrate ausgebildet ist. Dadurch ergibt sich ein sehr kompakter Aufbau, weil die optisch funktionale Transformationsgrenzfläche in die achromatischen Optikmittel integriert ist. Beide zusammen bilden somit ein Bauteil, insbesondere ein monolithisches Bauteil. Es ist entsprechend keine Justage zwischen der optisch funktionalen Transformationsgrenzfläche und den achromatischen Optikmitteln beziehungsweise zwischen der Transformationsgrenzfläche und den Substraten der achromatischen Optikmittel erforderlich.

Insbesondere kann dabei die optisch funktionale Transformationsgrenzfläche als Eintrittsfläche oder als Austrittsfläche eines der Substrate ausgebildet sein. Damit ist sie auf einfache Weise in eines der Substrate integriert.

Es kann vorgesehen sein, dass die optisch funktionale Transformationsgrenzfläche eine Form aufweist, die bei der Laserstrahlung eine Transformation von einem Gauß-Profil oder einem modifizierten Gauß-Profil in ein Top-Hat-Profil bewirken kann. Damit ist die Vorrichtung für gängige Laservorrichtungen einsetzbar.

Es besteht die Möglichkeit, dass die optisch funktionale Transformationsgrenzfläche eine Form aufweist, die eine Transformation in ein Top-Hat-Profil für mindestens eine erste Wellenlänge und mindestens eine zweite, von der ersten verschiedene Wellenlänge bewirken kann, insbesondere wobei die erste Wellenlänge zu der zweiten Wellenlänge eine Differenz von mehr als 50 nm, vorzugsweise von mehr als 100 nm, beispielsweise von mehr als 200 nm aufweist. Beispielsweise kann die Form der Transformationsgrenzfläche so gewählt werden, dass eine Transformation in ein Top-Hat-Profil für Laserstrahlung mit einer Wellenlänge von 1064 nm und für Laserstrahlung mit einer Wellenlänge von 532 nm ermöglicht wird.

Insbesondere kann vorgesehen sein, dass die optisch funktionale Transformationsgrenzfläche eine Form aufweist, die eine Transformation in ein Top-Hat-Profil für einen Wellenlängenbereich bewirken kann, insbesondere wobei der Wellenlängenbereich mehr als 50 nm, vorzugsweise mehr als 100 nm, beispielsweise mehr als 200 nm groß ist. Damit kann auch eine Laserstrahlung in Form von ultrakurzen Pulsen, die eine große Bandbreite von beispielsweise 100 nm aufweisen, in Laserstrahlung mit einem Top-Hat-Profil umgewandelt werden.

Es besteht die Möglichkeit, dass die Form der optisch funktionalen Transformationsgrenzfläche für die mindestens eine erste Wellenlänge und die mindestens eine zweite Wellenlänge hinsichtlich der durchzuführenden Transformation optimiert ist. Dabei kann für zwischen diesen beiden Wellenlängen liegende Wellenlängen ebenfalls eine gute Umwandlung in ein Top-Hat-Profil ermöglicht werden.

Es besteht durchaus die Möglichkeit, dass die Form der Transformationsgrenzfläche für drei oder mehr als drei unterschiedliche Wellenlängen optimiert ist.

Es kann vorgesehen sein, dass die Optimierung der Form der optisch funktionalen Transformationsgrenzfläche durch Minimierung des folgenden Funktionals erreicht wird:

$$R = \int \left| \mathfrak{I}\left[ \left(2/\sqrt{\pi}\right)^{1/2} e^{-x^2} e^{i\varphi_{\lambda_1}(x,y)} \right] - \left(1/\alpha\right)^{1/2} rect\left(f/\alpha\right) \right|^2 df$$

$$+ \int \left| \mathfrak{I}\left[ \left(2/\sqrt{\pi}\right)^{1/2} e^{-x^2} e^{i\varphi_{\lambda_2}(x,y)} \right] - \left(1/\alpha\right)^{1/2} rect\left(f/\alpha\right) \right|^2 df$$

mit

$\mathfrak{I}$ : Fouriertransformation,

$\alpha$: räumlicher Skalierungsfaktor,

f: Frequenzvariable des Fourierraums,

$\lambda_1$: erste Wellenlänge,

$\lambda_2$: zweite Wellenlänge,

$\varphi_{\lambda_1}$ und $\varphi_{\lambda_2}$: Phasenverteilungen und

x, y: Koordinaten eines Koordinatensystems.

Mit einer derartigen Optimierung lässt sich eine effektive Umwandlung von Laserstrahlung mit unterschiedlichen Wellenlängen in Laserstrahlung in ein Top-hat-Profil erreichen.

Es kann vorgesehen sein, dass das erste und/oder das zweite Substrat gekrümmte, als Linsen wirkende Grenzflächen aufweisen, wobei insbesondere zumindest eine oder einzelne der gekrümmten Flächen asphärisch gekrümmt sind. Dabei kann jedes der beiden Substrate auf ihren einander zugewandten Seiten einander entsprechende gekrümmte Flächen aufweisen, wobei die einander zugewandten Flächen aneinander anliegen. Die aneinander anliegenden Flächen können fest miteinander verbunden sein.

Es besteht die Möglichkeit, dass das erste Substrat aus Kronglas besteht oder dass das erste Substrat Kronglas umfasst. Weiterhin besteht die Möglichkeit, dass das zweite Substrat aus Flintglas besteht oder dass das zweite Substrat Flintglas umfasst. Durch Wahl dieser Materialien lassen sich weitgehend dispersionsfreie achromatische Optikmittel erreichen.

Vorzugsweise sind dabei die erste Abbe-Zahl größer als 50 und/oder die zweite Abbe-Zahl kleiner als 50. Insbesondere kann dabei der Brechungsindex der ersten Substrats kleiner als 1,6 sein, vorzugsweise zwischen 1,5 und 1,6 betragen. Weiterhin kann der Brechungsindex der zweiten Substrats größer als 1,6 sein, vorzugsweise zwischen 1,6 und 2,0 betragen.

Es kann vorgesehen sein, dass die Vorrichtung für die Strahlformung von Laserstrahlung in Form von Pulsen geeignet ist, die eine Pulslänge von weniger als 500 fs, vorzugsweise von weniger als 200 fs, insbesondere von weniger als 100 fs aufweisen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

Fig. 1    eine schematische Seitenansicht einer Ausführungsform einer erfindungsgemäßen Vorrichtung;

Fig. 2    eine Intensitätsverteilung einer mit einer erfindungsgemäßen Vorrichtung transformierten Laserstrahlung mit einer Wellenlänge von 1064 nm;

Fig. 3    eine Intensitätsverteilung einer mit einer erfindungsgemäßen Vorrichtung transformierten Laserstrahlung mit einer Wellenlänge von 532 nm.

In den Figuren sind gleiche und funktional gleiche Teile mit gleichen Bezugzeichen versehen.

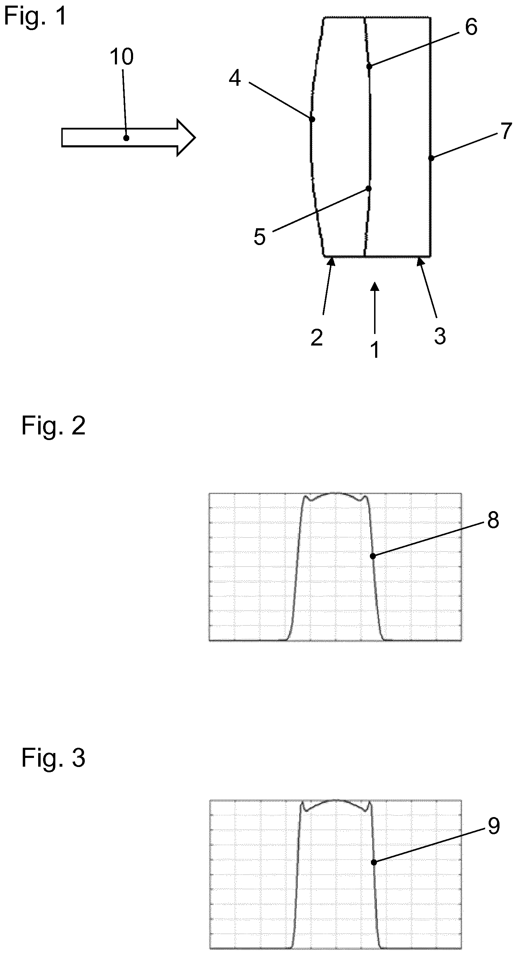

Die in Fig. 1 abgebildete Ausführungsform einer erfindungsgemäßen Vorrichtung umfasst achromatische Optikmittel 1, die ein erstes Substrat 2 und ein zweites Substrat 3 aufweisen.

Die Vorrichtung umfasst weiterhin eine Transformationsgrenzfläche 4, die Teil des ersten Substrats 1 ist und als dessen Eintrittsfläche dient. Die optisch funktionale Transformationsgrenzfläche 4 weist eine Form auf, die bei einer durch sie hindurchtretenden Laserstrahlung 10 (siehe Fig. 1) eine Transformation von einem Gauß-Profil oder einem modifizierten Gauß-Profil in ein Top-Hat-Profil bewirken kann.

Das erste Substrat 2 besteht aus Kronglas und weist eine Abbe-Zahl größer als 50 auf. Der Brechungsindex des ersten Substrats 2 kann zwischen 1,5 und 1,6 betragen. Das zweite Substrat 3 besteht aus Flintglas und weist eine Abbe-Zahl kleiner als 50 auf. Der Brechungsindex des zweiten Substrats 3 kann zwischen 1,6 und 2,0 betragen.

Die als Transformationsgrenzfläche 4 dienende Eintrittsfläche des ersten Substrats 1 ist konvex ausgebildet und kann asphärisch gekrümmt sein. Die dieser Fläche gegenüberliegende Austrittsfläche 5 des ersten Substrats 2 ist ebenfalls konvex und kann sphärisch gekrümmt sein. Es besteht alternativ die Möglichkeit, das auch die Austrittfläche 5 asphärisch gekrümmt ist.

Die dem ersten Substrat 2 zugewandte Eintrittsfläche 6 des zweiten Substrats 3 ist konkav und kann sphärisch gekrümmt sein. Es besteht alternativ die Möglichkeit, das auch die Eintrittsfläche 6 asphärisch gekrümmt ist. Die der Eintrittsfläche 6 gegenüberliegende Austrittsfläche 7 des zweiten Substrats 3 ist plan.

Insbesondere entspricht die Form der Eintrittsfläche 6 des zweiten Substrats 3 vergleichsweise genau die Form der Austrittsfläche 5 des ersten Substrats 2, so dass diese Flächen passgenau aneinander anliegen können. Die aneinander anliegenden Flächen sind fest miteinander verbunden, beispielsweise durch Verkleben.

Es besteht durchaus die Möglichkeit, die Reihenfolge der Substrate 1, 2 zu tauschen, so dass in Fig. 1 links ein aus Flintglas bestehendes Substrat und in Fig. 1 rechts ein aus Kronglas bestehendes Substrat vorgesehen ist.

Es besteht weiterhin die Möglichkeit, dass die Transformationsgrenzfläche in eine der anderen Flächen integriert ist. Es kann also beispielsweise die Austrittsfläche 7 des zweiten Substrats 3 so geformt sein, dass sie als Transformationsgrenzfläche dient. Es besteht auch die Möglichkeit, dass die Austrittsfläche 5 des ersten Substrats 2 und/oder die Eintrittsfläche 6 des zweiten Substrats 3 als Transformationsgrenzfläche ausgebildet sind.

Die Form der Transformationsgrenzfläche 4 ist im abgebildeten Ausführungsbeispiel für zwei unterschiedliche Wellenlängen, nämlich für eine erste Wellenlänge $\lambda_1$ = 1063 nm und für eine zweite Wellenlänge $\lambda_2$ = 532 nm optimiert. Es besteht durchaus die Möglichkeit, dass die Form der Transformationsgrenzfläche 4 für drei oder mehr als drei unterschiedliche Wellenlängen optimiert ist.

Fig. 2 zeigt schematisch eine Intensitätsverteilung 8 einer durch die Vorrichtung gemäß Fig. 1 von links nach rechts hindurchgetretenen Laserstrahlung 10, die eine Wellenlänge von 1064 nm aufweist. Die Intensitätsverteilung kann dabei beispielsweise eine Fernfeldverteilung sein oder von einer entsprechenden Fokussieroptik in eine Arbeitsebene fokussiert sein. Es zeigt sich, dass die Laserstrahlung ein Top-Hat-Profil aufweist.

Fig. 3 zeigt schematisch eine Intensitätsverteilung 9 einer durch die Vorrichtung gemäß Fig. 1 von links nach rechts hindurchgetretene Laserstrahlung 10, die eine Wellenlänge von 532 nm aufweist. Es zeigt sich, dass die Laserstrahlung ebenfalls ein Top-Hat-Profil aufweist.

Die Transformationsgrenzfläche 4 ist so geformt, dass nicht nur für die beiden Wellenlängen 532 nm und 1064 nm eine Transformation in ein Top-Hat-Profil erfolgt, sondern dass eine entsprechende Transformation in ein Top-Hat-Profil auch für Laserstrahlungen mit dazwischen liegenden Wellenlängen erfolgt. Damit eignet sich die Vorrichtung für die Transformation von breitbandigen ultrakurzen Laserpulsen.

Mathematisch kann die Aufgabe der Optimierung der Transformationsgrenzfläche 4 für zwei verschiedene Wellenlängen $\lambda_1$ und $\lambda_2$ in einem iterativen Prozess durch Minimierung des nachfolgend wiedergegebenen Funktionals R - hier in einer dimensionslosen Darstellung - gelöst werden.

$$R = \int \left| \Im \left[ \left(2/\sqrt{\pi}\right)^{1/2} e^{-x^2} e^{i\varphi_{\lambda_1}(x,y)} \right] - \left(1/\alpha\right)^{1/2} rect\left(f/\alpha\right) \right|^2 df$$

$$+ \int \left| \Im \left[ \left(2/\sqrt{\pi}\right)^{1/2} e^{-x^2} e^{i\varphi_{\lambda_2}(x,y)} \right] - \left(1/\alpha\right)^{1/2} rect\left(f/\alpha\right) \right|^2 df$$

mit

$\mathfrak{J}$ : Fouriertransformation,

$\alpha$: räumlicher Skalierungsfaktor,

f: Frequenzvariable des Fourierraums,

$\lambda_1$: erste Wellenlänge,

$\lambda_2$: zweite Wellenlänge,

$\varphi_{\lambda_1}$ und $\varphi_{\lambda_2}$: Phasenverteilungen und

x, y: Koordinaten eines Koordinatensystems.

Die Minimierung des Funktionales R führt zu den gesuchten Phasenverteilungen $\varphi_{\lambda_1}$ und $\varphi_{\lambda_2}$ aufgrund derer die Form der Transformationsgrenzfläche definiert ist.

Innerhalb des Funktionals stellt der Term $\left(2\big/\sqrt{\pi}\right)^{1/2} e^{-x^2}$ die Gaußsche Intensitätsverteilung des Eingangsstrahls dar, auf welche ein Phasenfaktor $e^{i\varphi}$ aufmultipliziert wird.

Um die auf den Gaußschen Strahl aufgeprägte Phasenmodulation in die gewünschte Verteilung der Ausgangsintensität zu überführen ist es notwendig diesen Term einer Fourier Transformation $\mathfrak{J}$ zu unterziehen, die in der Praxis durch eine felderzeugende Fourier-Transformations-Linse - auch kurz Feldlinse genannt - realisiert wird.

Der Term der Form $(1/\alpha)^{1/2} \text{rect}(f/\alpha)$ entspricht einer Darstellung der tophatförmigen Ziel-Intensitätsverteilung.

Der Faktor $\alpha$ ist ein Parameter, der die räumliche Dimension des Zielfeldes festlegt. Durch Subtraktion der Terme der transformierten Eingangsintensitätsverteilung von der Zielintensitätsverteilung wird nun bei Minimierung des Funktionals R die gewünschte Funktionalität der Transformationsgrenzfläche gewährleistet.

**Patentansprüche**

1.  Vorrichtung zur Strahlformung von Laserstrahlung (10), insbesondere zur Strahlformung von Laserstrahlung (10) in Form von ultrakurzen Pulsen, umfassend

    - eine optisch funktionale Transformationsgrenzfläche (4), durch die die Laserstrahlung (10) zumindest teilweise derart hindurch treten kann, dass das Profil der Laserstrahlung (10) in ein Top-Hat-Profil transformiert wird,
    - achromatische Optikmittel (1), die ein erstes Substrat (2) mit einer ersten Abbe-Zahl und ein zweites Substrat (3) mit einer zweiten Abbe-Zahl umfassen, wobei die erste Abbe-Zahl von der zweiten Abbe-Zahl verschieden ist, wobei die beiden Substrate (2, 3) miteinander verbundenen sind, und wobei die Laserstrahlung (10) zumindest teilweise nacheinander durch beiden Substrate (2, 3) hindurch treten kann,

    **dadurch gekennzeichnet, dass** die optisch funktionale Transformationsgrenzfläche (4) an einem der beiden Substrate (2, 3) ausgebildet ist.

2.  Vorrichtung nach Anspruch 1, **dadurch gekennzeichnet, dass** die optisch funktionale Transformationsgrenzfläche (4) als Eintrittsfläche oder als Austrittsfläche eines der Substrate (2, 3) ausgebildet ist.

3.  Vorrichtung nach einem der Ansprüche 1 oder 2, **dadurch gekennzeichnet, dass** optisch funktionale Transformationsgrenzfläche (4) eine Form aufweist, die bei der Laserstrahlung (10) eine Transformation von einem Gauß-Profil oder einem modifizierten Gauß-Profil in ein Top-Hat-Profil bewirken kann.

4.  Vorrichtung nach einem der Ansprüche 1 bis 3, **dadurch gekennzeichnet, dass** die optisch funktionale Transformationsgrenzfläche (4) eine Form aufweist, die eine Transformation in ein Top-Hat-Profil für mindestens eine erste Wellenlänge ($\lambda_1$) und mindestens eine zweite, von der ersten verschiedene Wellenlänge ($\lambda_2$) bewirken kann, insbesondere wobei die erste Wellenlänge ($\lambda_1$) zu der zweiten Wellenlänge ($\lambda_2$) eine Differenz von mehr als 50 nm, vorzugsweise von mehr als 100 nm, beispielsweise von mehr als 200 nm aufweist.

5.  Vorrichtung nach einem der Ansprüche 1 bis 4, **dadurch gekennzeichnet, dass** die optisch funktionale Transformationsgrenzfläche (4) eine Form aufweist, die eine Transformation in ein Top-Hat-Profil für einen Wellenlängenbereich bewirken kann, insbesondere wobei der Wellenlängenbereich mehr als 50 nm, vorzugsweise mehr als 100 nm, beispielsweise mehr als 200 nm groß ist.

6. Vorrichtung nach einem der Ansprüche 4 oder 5, **dadurch gekennzeichnet, dass** die Form der optisch funktionalen Transformationsgrenzfläche (4) für die mindestens eine erste Wellenlänge ($\lambda_1$) und die mindestens eine zweite Wellenlänge ($\lambda_2$) hinsichtlich der durchzuführenden Transformation optimiert ist.

7. Vorrichtung nach Anspruch 6, **dadurch gekennzeichnet, dass** die Optimierung der Form der optisch funktionalen Transformationsgrenzfläche (4) durch Minimierung des folgenden Funktionals erreicht wird:

$$R = \int \left| \Im\left[ \left(2/\sqrt{\pi}\right)^{1/2} e^{-x^2} e^{i\varphi_{\lambda_1}(x,y)} \right] - \left(1/\alpha\right)^{1/2} rect\left(f/\alpha\right) \right|^2 df$$

$$+ \int \left| \Im\left[ \left(2/\sqrt{\pi}\right)^{1/2} e^{-x^2} e^{i\varphi_{\lambda_2}(x,y)} \right] - \left(1/\alpha\right)^{1/2} rect\left(f/\alpha\right) \right|^2 df$$

mit

$\Im$ : Fouriertransformation,
$\alpha$: räumlicher Skalierungsfaktor,
f: Frequenzvariable des Fourierraums,
$\lambda_1$: erste Wellenlänge,
$\lambda_2$: zweite Wellenlänge,
$\varphi_{\lambda_1}$ und $\varphi_{\lambda_2}$: Phasenverteilungen und
x, y: Koordinaten eines Koordinatensystems.

8. Vorrichtung nach einem der Ansprüche 1 bis 7, **dadurch gekennzeichnet, dass** das erste und/oder das zweite Substrat (2, 3) gekrümmte, als Linsen wirkende Grenzflächen aufweisen, wobei insbesondere zumindest eine oder einzelne der gekrümmten Flächen asphärisch gekrümmt sind.

9. Vorrichtung nach Anspruch 8, **dadurch gekennzeichnet, dass** jedes der beiden Substrate (2, 3) auf ihren einander zugewandten Seiten einander entsprechende gekrümmte Flächen aufweisen, wobei die einander zugewandten Flächen aneinander anliegen.

10. Vorrichtung nach einem der Ansprüche 1 bis 9, **dadurch gekennzeichnet, dass** das erste Substrat (2) aus Kronglas besteht oder dass das erste Substrat (2) Kronglas umfasst.

11. Vorrichtung nach einem der Ansprüche 1 bis 10, **dadurch gekennzeichnet, dass** das zweite Substrat (3) aus Flintglas besteht oder dass das zweite Substrat (3) Flintglas umfasst.

12. Vorrichtung nach einem der Ansprüche 1 bis 11, **dadurch gekennzeichnet, dass** die erste Abbe-Zahl größer als 50 ist und/oder dass die zweite Abbe-Zahl kleiner als 50 ist.

13. Vorrichtung nach einem der Ansprüche 1 bis 12, **dadurch gekennzeichnet, dass** der Brechungsindex der ersten Substrats (2) kleiner als 1,6 ist, vorzugsweise zwischen 1,5 und 1,6 beträgt.

14. Vorrichtung nach einem der Ansprüche 1 bis 13, **dadurch gekennzeichnet, dass** die der Brechungsindex der zweiten Substrats (3) größer als 1,6 ist, vorzugsweise zwischen 1,6 und 2,0 beträgt.

15. Vorrichtung nach einem der Ansprüche 1 bis 14, **dadurch gekennzeichnet, dass** die Vorrichtung für die Strahlformung von Laserstrahlung (10) in Form von Pulsen geeignet ist, die eine Pulslänge von weniger als 500 fs, vorzugsweise von weniger als 200 fs, insbesondere von weniger als 100 fs aufweisen.

Fig. 1

10

4

6

5

7

2  1  3

Fig. 2

8

Fig. 3

9

Europäisches
Patentamt

European
Patent Office

Office européen
des brevets

## EUROPÄISCHER RECHERCHENBERICHT

Nummer der Anmeldung

EP 18 17 7800

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Carlos Gonzalez Gomez: "LASER BEAM SHAPING", , 3. Juli 2012 (2012-07-03), XP055449791, Brno, CZ Gefunden im Internet: URL:https://repositorio.unican.es/xmlui/bi tstream/handle/10902/1483/349738.pdf [gefunden am 2018-02-09] * Seite 18; Abbildung 2.3 * ----- | 1-15 | INV. G02B27/09 G02B19/00 |
| Y | LASKIN ALEXANDER ET AL: "Building achromatic refractive beam shapers", VISUAL COMMUNICATIONS AND IMAGE PROCESSING; 20-1-2004 - 20-1-2004; SAN JOSE,, Bd. 9194, 2. Oktober 2014 (2014-10-02), Seiten 91940R-91940R, XP060040486, DOI: 10.1117/12.2061343 ISBN: 978-1-62841-730-2 * Section 2.2; Abbildung 4; Tabellen 3,4 * * Abstract * ----- | 1-15 | |
| A | JEFFERSON C M ET AL: "An achromatic refractive laser beam reshaper", VISUAL COMMUNICATIONS AND IMAGE PROCESSING; 20-1-2004 - 20-1-2004; SAN JOSE,, Bd. 5175, Nr. 1, 1. Januar 2003 (2003-01-01), Seiten 1-11, XP008082674, DOI: 10.1117/12.511304 ISBN: 978-1-62841-730-2 * Abbildung 1 * * Seite 3, letzter Absatz * ----- -/-- | 1 | RECHERCHIERTE SACHGEBIETE (IPC) G02B |

Der vorliegende Recherchenbericht wurde für alle Patentansprüche erstellt

| Recherchenort | Abschlußdatum der Recherche | Prüfer |
|---|---|---|
| München | 19. November 2018 | Linke, Felix |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 18 17 7800

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 998 215 A1 (MOLECULAR TECHNOLOGY MOLTECH G [DE]) 3. Dezember 2008 (2008-12-03) * Absatz [0007]; Abbildungen 1a,2 * | 1-15 | |
| A | LASKIN ALEXANDER ET AL: "Beam shaping to provide round and square-shaped beams in optical systems of high-power lasers", PROCEEDINGS OF SPIE; [PROCEEDINGS OF SPIE ISSN 0277-786X VOLUME 10524], SPIE, US, Bd. 9834, 13. Mai 2016 (2016-05-13), Seiten 98340B-98340B, XP060071116, DOI: 10.1117/12.2218620 ISBN: 978-1-5106-1533-5 * Abbildung 1 * | 1-15 | |
| A | ALEXANDER LASKIN: "Achromatic refractive beam shaping optics for broad spectrum laser applications", SPIE, PO BOX 10 BELLINGHAM WA 98227-0010 USA, Bd. 7430, 1. August 2009 (2009-08-01), XP040500891, * Abbildungen 1,2 * | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 19. November 2018 | Linke, Felix |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 17 7800

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2018

| Im Recherchenbericht angeführtes Patentdokument | Datum der Veröffentlichung | Mitglied(er) der Patentfamilie | Datum der Veröffentlichung |
|---|---|---|---|
| EP 1998215    A1 | 03-12-2008 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100208356 A1